# EUROPEAN PATENT SPECIFICATION

(11) **EP 3 756 911 B1**
(45) Date of publication and mention of the grant of the patent: **20.04.2022**
(21) Application number: 20181742.6
(22) Date of filing: 23.06.2020
(51) Int. Cl.: B60G 9/02, B60G 1/04, B60G 11/16, A01D 41/02, B62D 7/04, A01B 69/04, A01D 43/063, A01D 67/00, B62D 9/00

(54) **VEHICLE WITH A SWING AXLE AND A STABILISATION MECHANISM FOR THE SWING AXLE**
FAHRZEUG MIT SCHWINGACHSE UND STABILISIERUNGSMECHANISMUS FÜR DIE SCHWINGACHSE
VÉHICULE À ESSIEU OSCILLANT ET MÉCANISME DE STABILISATION POUR L'ESSIEU OSCILLANT

(30) Priority: 26.06.2019 NL 2023388
(43) Date of publication of application: 30.12.2020
(73) Proprietor: Lely Patent N.V., 3147 PB Maassluis (NL)
(72) Inventor: DE JONG, Ruth, 3147 PB MAASSLUIS (NL); VISSER, Arend Cornelis, 3147 PB MAASSLUIS (NL); VERWEIJ, Rochus Johannes, 3147 PB MAASSLUIS (NL)
(74) Representative: Octrooibureau Van der Lely N.V.

(56) References cited:
- EP-A1- 0 691 256
- WO-A1-2019/197012
- DE-A1-102015 117 585
- FR-A1- 2 839 937
- GB-A- 2 265 874
- US-A- 3 155 397
- US-A- 4 161 325
- US-A1- 2004 080 134

## Description

The invention generally relates to a vehicle for uneven terrain according to the preamble of claim 1. Different aspects of such a vehicle are disclosed in documents GB 2 265 874 A and DE 10 2015 117585 A1, which in combination define the prior art. Additional background art, relating to the stabilizing mechanism used in this invention, is disclosed in document US 4 161 325 A.

The invention relates in particular to an autonomous and self-propelled vehicle for uneven terrain, comprising: a frame on which a ball hinge is situated, and a pair of individually driven wheels and a swing axle to which the wheels are attached, wherein the swing axle is movable about a swing axis through the ball hinge in order to perform a swinging movement, which swing axis extends in a direction at right angles to rotation axes of the wheels, and wherein the swing axle is also movable about a steering axis through the ball hinge in order to perform a steering movement, which steering axis extends in a direction at right angles to both the swing axis and the rotation axes of the wheels.

The use of a swing axle in a vehicle for uneven terrain is generally known. Generallly, the use of a swing axle results in a good ground-contour following ability of the wheels of the vehicle. An undesirable situation in which the wheels could start to bounce on uneven terrain is thus prevented.

The invention is in the context of a vehicle which comprises at least one pair of individually driven wheels and a swing axle to which these wheels are attached. The wheels in such a construction are rotatable about respective rotation axes in order to be able to propel the vehicle, while the swing axle itself is not able to perform a movement about an axis which extends in the same direction as the rotation axes of the wheels. Such a swing axle may be rigid over the entire distance between the wheels and thus achieve a fixed relationship between the wheels under all circumstances, wherein the one wheel moves down when the other wheel moves up, and vice versa. In particular, the swing axle is movable about a swing axis in order to perform a swinging movement, which swing axis extends in a direction at right angles to the rotation axes of the wheels.

The swing axle is furthermore movable about a steering axis in order to perform a steering movement, which steering axis extends in a direction at right angles to both the swing axis and the rotation axes of the wheels. Due to the fact that the wheels which are attached to the swing axle are individually driven, it is possible to steer the vehicle in a desired direction by causing a difference in speeds of rotation of the wheels, wherein an oblique position of the wheels of the vehicle is produced, in which the one wheel is in a position which, viewed in the longitudinal direction of the vehicle, is further forward and the other wheel is in a position which, viewed in the longitudinal direction of the vehicle, is further backward. If no steering of the vehicle takes place when it is travelling and the vehicle therefore travels straight ahead, the swing axle extends in a direction at right angles to the longitudinal direction of the vehicle. However, if the vehicle is being steered and the vehicle travels in a certain direction other than straight ahead, the swing axle is free to follow the oblique position of the wheels and thus extend in a direction other than at right angles to the longitudinal direction of the vehicle.

In order to allow the swinging movement and the steering movement of the swing axle, the vehicle according to the invention uses a ball hinge. In such a construction, the swing axis and the steering axis both extend through the ball hinge. It is practical if the swing axle is mounted directly on the ball hinge, wherein the swing axle may be rigidly connected either to the ball or to the ball holder of the ball hinge.

In addition to the two wheels which are attached to the swing axle, the vehicle will usually comprise at least another pair of wheels. This at least one other pair of wheels may also be swingable and/or steerable, but this is not obligatory in the context of the invention. In a vehicle having two pairs of wheels, it may be practical if only the pair of wheels which, viewed in the longitudinal direction of the vehicle, is the rearmost pair of wheels is swingable, while both pairs of wheels are steerable.

In practice, it has been found that in the case of a vehicle which comprises at least one swingable pair of wheels, the vehicle may roll to a considerable degree when the vehicle is propelled across uneven terrain, in particular when the wheels are provided with tyres which are relatively large and are kept at a relatively low pressure for a low ground pressure. This may be particularly disadvantageous if the vehicle comprises a navigation system which uses a camera to determine its position. It is therefore an object of the invention to provide a measure which is aimed at reducing said rolling of the vehicle without having to adjust the tyres.

With a view to the above, the invention provides an autonomous and self-propelled vehicle for uneven terrain, comprising: a frame on which a ball hinge is situated, a pair of individually driven wheels and a swing axle to which the wheels are attached, wherein the swing axle is movable about a swing axis through the ball hinge in order to perform a swinging movement, which swing axis extends in a direction at right angles to rotation axes of the wheels, and wherein the swing axle is also movable about a steering axis through the ball hinge in order to perform a steering movement, which steering axis extends in a direction at right angles to both the swing axis and the rotation axes of the wheels, and a stabilizing mechanism which is coupled to the frame and is configured to keep the swing axle in a defined rest swing position below a threshold value for a difference in pressure of the wheels on the ground.

It follows from the above definition that the invention provides a stabilizing mechanism which is configured to act on the swing axle in such a way that the swing axle is not free to perform a swinging movement in all circumstances, in particular not when a difference in pressure of the wheels on the ground is below a threshold value. The result thereof is that with relatively small uneven objects, the wheels have a good ground-contour following ability, mainly on the basis of the properties of the tyres, whereas at relatively large uneven objects, there is an additional effect to the ground-contour following ability which is achieved on the basis of a swinging movement of the swing axle. As an advantageous consequence thereof, the vehicle will roll to a lesser degree when travelling over uneven terrain than if the measure according to the invention would not be used. Said defined rest swing position may, in particular, be a position in which the swing axle extends in a direction at right angles to the steering axis.

The stabilizing mechanism may furthermore be configured to allow a swinging movement of the swing axle above the threshold value for a difference in pressure of the wheels on the ground at a defined relationship for a difference in pressure of the wheels on the ground and an angular displacement of the swing axle about the swing axis with respect to the rest swing position. By ensuring that the swinging movement occurs in a defined manner when the vehicle travels across uneven terrain, a completely controllable swinging movement has been achieved, so that the effect of minimal rolling can actually be achieved in a manner which is intended for the purpose. It is for example possible in this context that the swing axle is controlled or actuated by the stabilizing mechanism in such a way that, in a situation in which an angular displacement of the swing axle about the swing axis with respect to the rest swing position is permitted, a defined difference in pressure of the wheels on the ground, that is to say, a certain value for the difference in pressure of the wheels on the ground, is maintained.

As has been explained above, the use of the stabilizing mechanism in the vehicle according to the invention offers the advantage that it reduces rolling of the vehicle. A further advantage which the use of the stabilizing mechanism brings with it is the fact that it may furthermore be configured to determine a maximum angular displacement of the swing axle about the swing axis with respect to the rest swing position, in two directions about the swing axis.

The stabilizing mechanism may be configured to act on the swing axle in an entirely mechanical way, while using relatively simple components, such as pressure springs or draw springs and components which can engage with each other. In this case, it is not necessary to use, for example a hydraulic control unit for the swing axle, which is not only advantageous in regards to preventing a complicated design and construction of the vehicle, but also in regards to avoiding the use of environmentally harmful substances and the risk of leakage thereof.

According to the invention, the stabilizing mechanism comprises prestressing means which are configured to prestress the swing axle to the defined rest swing position by exerting a prestressing force on the swing axle. The prestressing means may comprise, for example, at least a spring means. Using said prestressing means ensures that when the difference in pressure of the wheels on the ground is below the threshold value, this is insufficient to act against the prestressing force in such a way that the swing axle can be moved out of the defined rest swing position. Only when the difference in pressure of the wheels on the ground reaches the threshold value or exceeds it, the prestressing means will no longer be able to keep the swing axle in the defined rest swing position.

In connection with the use of the abovementioned prestressing means, the stabilizing mechanism comprises a stabilizing element which is coupled to the frame and is movable with respect to frame about an axis which runs parallel to the steering axis, wherein the stabilizing element has a guiding surface, and wherein the prestressing means are configured to tension the guiding surface against a follower element which is coupled to the swing axle. The use of a combination of a guiding surface and a follower element offers a possibility to determine the defined rest swing position and the other swing positions of the swing axle without requiring complicated measures.

The follower element may be a roller which is rotatable about an axis which runs parallel to the steering axis. In this way, the follower element can move along the guiding surface with minimal resistance, namely by rolling over the same. The stabilizing element may be an element which contains an opening, wherein the guiding surface is a portion of the surface of the stabilizing element which surrounds the opening. In such a stabilizing element, the extreme swing positions can also easily be defined, namely on the basis of the shape and the size of the opening.

The shape of the guiding surface may be chosen in such a way that it supports achieving the desired effect of maintaining the defined rest swing position of the swing axle when the difference in pressure of the wheels on the ground is below the threshold value. It may be advantageous, for example, if the guiding surface has a relatively narrow central portion which is configured to hold the follower element in a shape-determined manner when the swing axle is in the rest swing position, and has a configuration which generally diverges from the central portion. In such a case, there is a form factor at the position of the guiding surface and the follower element which supports retaining the swing axle in the rest swing position.

In view of the above, it should be noted that the guiding surface may have a generally V-shaped configuration. Furthermore, it may be the case that a shape of each of two portions of the guiding surface which are configured to guide the follower element during an angular displacement of the swing axle about the swing axis with respect to the rest swing position is adapted to, in combination with a force/displacement curve of the prestressing means, produce a substantially constant difference in the pressure of the wheels on the ground. As has been noted above, this function of the stabilizing mechanism may be desirable for the situation in which an angular displacement of the swing axle about the swing axis with respect to the rest swing position is permitted by the stabilizing mechanism. However, this does not alter the fact that other defined relationships between angular displacement of the swing axle about the swing axis and the difference in pressure of the wheels on the ground are possible, in particular a relationship in which the difference in pressure of the wheels on the ground increases when the angular displacement of the swing axle about the swing axis increases, or a relationship in which the difference in pressure of the wheels on the ground decreases when the angular displacement of the swing axle about the swing axis increases.

In a possible practical embodiment, the vehicle according to the invention comprises a holder arm which is coupled to the frame and is movable with respect to the frame about an axis which runs parallel to the steering axis. The swing axle may then be coupled to the holder arm and be movable with respect to the holder arm about the steering axis. The holder arm inter alia has a function in preventing a movement of the swing axle about an axis which extends in a direction at right angles to both the swing axis and the steering axis, that is to say, in the direction of the rotation axes of the wheels. The stabilizing mechanism may act on the swing axle by engaging with this holder arm. If a guiding surface and a follower element are used in the vehicle according to the invention, as has been described and explained above, the follower element may then be situated on the holder arm. With respect to an existing design of the vehicle containing said arm, the addition of the stabilizing mechanism may entail the extension of said holder arm and the provision of a follower element at the end of the extended portion of the holder arm which has thus been obtained. In general, the modifications made to the existing design may in particular be additions which do not require complicated modifications of existing components.

The vehicle is autonomous and self-propelled and is preferably provided with a navigation system. Based on the use of the stabilizing mechanism for the swing axle in the vehicle, the performance of the navigation system is significantly less impeded than if the vehicle were not equipped with the stabilizing system, with the degree of disruption possibly being reduced to a level which cannot really be referred to as disruption.

The vehicle may be any arbitrary type of autonomous and self-propelled vehicle with wheels which is in particular intended to be used on uneven terrain. In this context, a practical example is a vehicle which comprises a cutting mechanism and/or a mechanism which is configured to collect cut plants.

The invention will be explained below with reference to the figures which are generally diagrammatic and relate to a non-limiting exemplary embodiment of a vehicle which is provided with a swing axle, with identical reference numerals denoting identical or similar components, and in which:
Figure 1 shows a perspective view of the vehicle,
Figure 2 shows a perspective view of a rear-axle area of the vehicle, wherein in particular two wheels, a swing axle and components of a stabilizing mechanism for the swing axle are illustrated,
Figure 3 shows a view of a cross section which has been taken across rotation axes of the wheels,
Figure 4 shows a top view of the rear-axle area for a rest swing position of the swing axle,
Figure 5 shows a perspective view of a portion of the stabilizing mechanism, for the rest swing position of the swing axle,
Figure 6 shows a rest swing position and a swung position of the swing axle,
Figure 7 shows a top view of the rear-axle area for the swung position of the swing axle, and
Figure 8 shows a perspective view of a portion of the stabilizing mechanism, for the swung position of the swing axle.

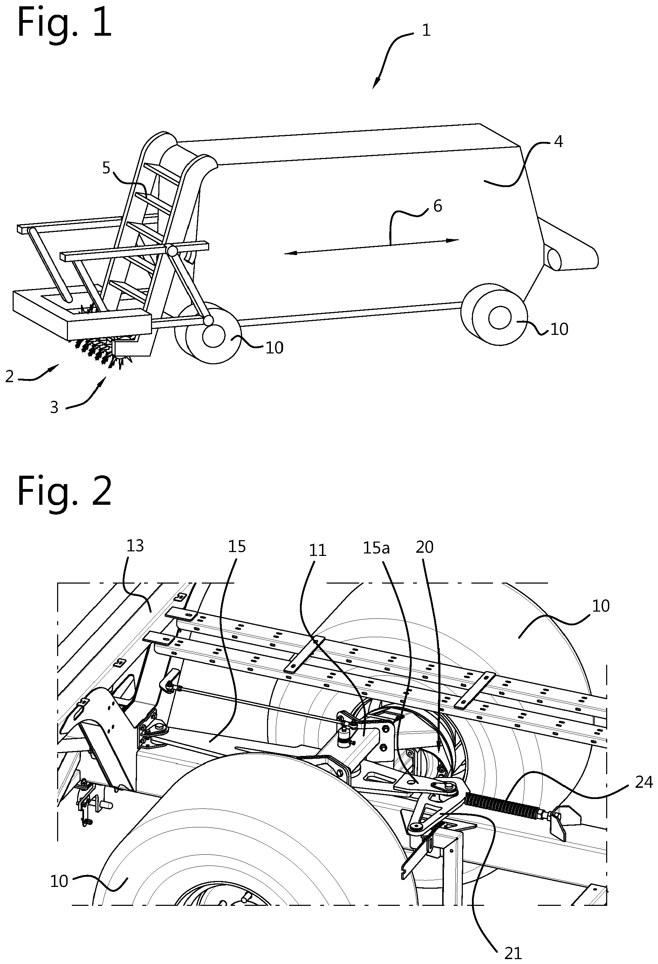

Figure 1 shows a practical example of a vehicle 1 according to the invention, which comprises a mowing or cutting mechanism 2, and which is also provided with a mechanism 3 which is configured to collect cut plants, such as cut grass. In particular, the vehicle has a container 4 and a conveying system 5 for supplying cut plants to the container 4 from a position where the cut plants can be picked up. Picking up the cut plants may take place in any suitable way. The conveying system 5 for conveying the cut plants to the container 4 may be of any suitable design. For example, suitable means for distributing the cut plants over the container 4 may be provided in the container 4.

Terms, such as "above" and "below" which are used below, should be understood against the background of a standard orientation of the vehicle 1 on a terrain. A longitudinal direction of the vehicle 1 is denoted by means of a double arrow 6 in Figure 1.

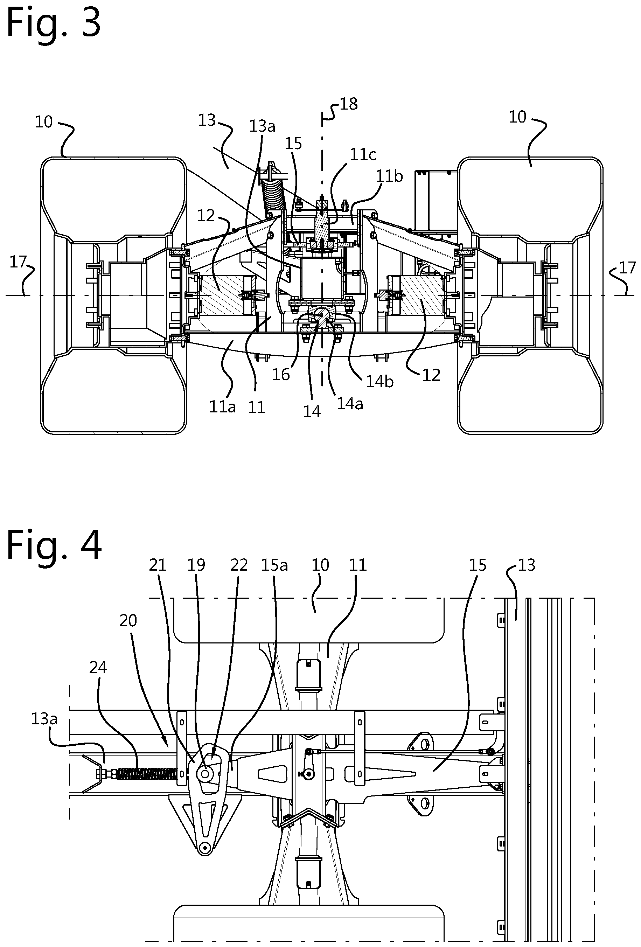

The vehicle 1 is provided with two pairs of wheels 10. A rearmost pair of wheels 10 is attached to a swing axle 11. The wheels 10 of this pair are individually driven by means of motor units 12 which are provided at each of the wheels 10. In the illustrated example, the swing axle 11 is not configured as a bar or the like, but is configured more like a framework, as can clearly be seen particularly in Figure 3. Figure 3 furthermore shows that the swing axle 11 is movably coupled to a frame 13 of the vehicle 1 by means of a ball hinge 14. In the illustrated example, the ball 14a of the ball hinge 14 is arranged on a bottom crossbeam 11a of the swing axle 11, and the ball holder 14b is arranged on a frame beam 13a which extends substantially in the longitudinal direction of the vehicle 1. In order to provide further coupling of the swing axle 11 to the frame 13, a holder arm 15 is provided which extends from the frame 13 and engages with a top crossbeam 11b.

The swing axle 11 is movable about a swing axis 16 through the ball hinge 14 in order to perform a swinging movement, that is to say, a movement which is related to an upward movement of the one wheel 10 and a related downward movement of the other wheel 10, and which typically occurs when the vehicle 1 is moved across uneven terrain. The swing axis 16 extends in a direction at right angles to rotation axes 17 of the wheels 10. Furthermore, the swing axle 11 is movable about a steering axis 18 through the ball hinge 14 in order to perform a steering movement. The steering axis 18 extends in a direction at right angles to both the swing axis 16 and the rotation axes 17 of the wheels 10. The three aforementioned axes 16, 17, 18 are illustrated in Figure 3.

A steering movement may be achieved by driving the one wheel 10 at a higher speed than the other wheel 10. As has been explained above, the swing axle 11 rotates about the steering axis 18 during a steering movement, with the ball 14a of the ball hinge 14 rotating in the ball holder 14b and a coupling portion 11c of the top crossbeam 11b of the swing axle 11 rotating in the holder arm 15. At the location of the coupling to the frame 13, the holder arm 15 is movable with respect to the frame 13 about an axis which runs parallel to the steering axis. In general, the holder arm 15 has a function in allowing the swinging movement and the steering movement of the swing axle 11 and in preventing a movement of the swing axle 11 about an axis through the ball hinge 14 which runs parallel to the rotation axes 17 of the wheels 10.

The vehicle 1 comprises a stabilizing mechanism 20 which is coupled to the frame 13 and which is configured to keep the swing axle 11 in a defined rest swing position below a threshold value for a difference in pressure of the wheels 10 on the ground. In the illustrated practical example, this rest swing position is a position of the swing axle 11 in which it extends in a direction at right angles to the steering axis 18. Starting from a situation in which the vehicle 1 is situated on a horizontal, flat terrain, this is a horizontal direction.

In the context of the invention, the stabilizing mechanism 20 may be configured in any suitable way. An advantage of the use of such a stabilizing mechanism 20 is the fact that rolling of the vehicle 1 during travel over uneven terrain is reduced compared to a situation where the vehicle 1 is not equipped with said mechanism. Only when the vehicle 1 travels over uneven objects which cause a difference in pressure of the wheels 10 on the ground above a certain threshold value, is the swing axle 11 released to perform a swinging movement, whereas the swing rest position of the swing axle 11 is maintained with smaller uneven objects. Reducing the rolling of the vehicle 1 may be desirable for various reasons, for example in order to cause minimal disruption to the performance of a navigation system.

In the illustrated example, the stabilizing mechanism 20 comprises a stabilizing element 21 which is coupled to the frame 13 and is movable with respect to the frame 13 about an axis which runs parallel to the steering axis 18. The stabilizing element 21 is provided with an opening 22 with a design which aims at maintaining the swing rest position of the swing axle 11 as long as the difference in pressure of the wheels on the ground is below the threshold value and to allow the swinging movement of the swing axle 11 which takes place at a higher difference of pressure of the wheels on the ground to take place in a defined manner and in this case to also determine a maximum angular displacement of the swing axle 11 about the swing axis 16 with respect to the rest swing position, in two directions about the swing axis 16. The holder arm 15 is provided with an extended portion 15a in which a roller 19 is accommodated, the roller 19 being rotatable about an axis which runs parallel to the steering axis 18. This roller 19 runs against a guiding surface 23 of the stabilizing element 21, wherein the guiding surface 23 is a portion of the surface of the stabilizing element 21 which surrounds the opening 22. In order to ensure contact between the roller 19 and the guiding surface 23, a pressure spring 24 is provided which extends from the frame 13 and presses against the stabilizing element 21, in a direction towards the holder arm 15.

Figures 4-8 serve to illustrate the swing rest position and a swung position of the swing axle 11.

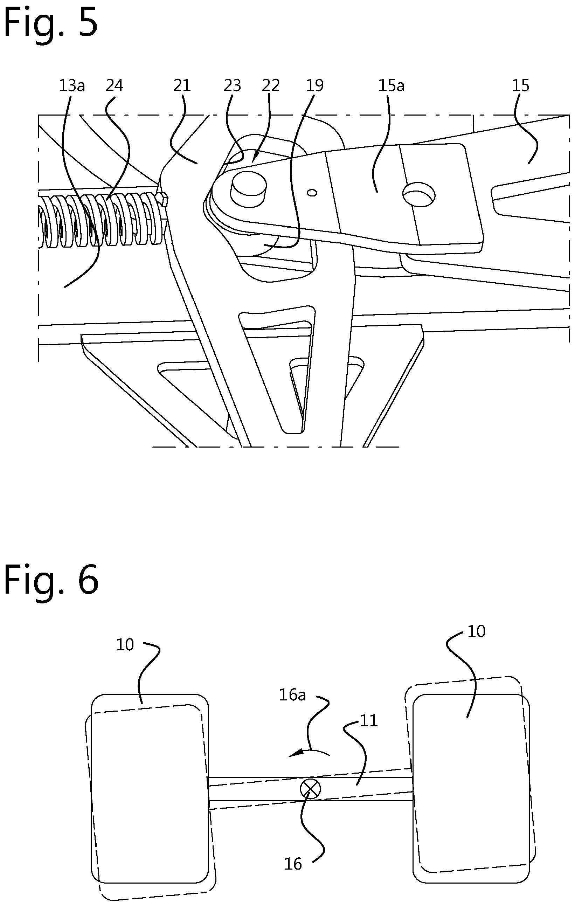

Figures 4 and 5 relate to the swing rest position of the swing axle 11 and show how, in this position, the holder arm 15 extends substantially in the longitudinal direction 6 of the vehicle 1, and how the roller 19 is positioned on the guiding surface 23. The guiding surface 23 has a generally V-shaped configuration, with the swing axle 11 being in the swing rest position when the roller 19 is situated in the deepest part of the V-shape. The deepest part of the V-shape forms a relatively narrow central portion of the guiding surface 23 which is configured to hold the roller 19 in a shape-determined manner. On the basis thereof, the design of the guiding surface 23 contributes to maintaining the swing rest position of the swing axle 11 when the difference in pressure of the wheels 10 on a ground is below the threshold value.

Figure 6 illustrates how the swing axle 11 can assume a swung position from the swing rest position. In the Figure, the swing axle 11 and the wheels 10 in the swing rest position are indicated by solid lines, whereas the swing axle 11 and the wheels 10 in the swung position are indicated by dashed lines. The angular displacement of the swing axle 11 about the swing axis 16 is indicated by means of a curved arrow 16a.

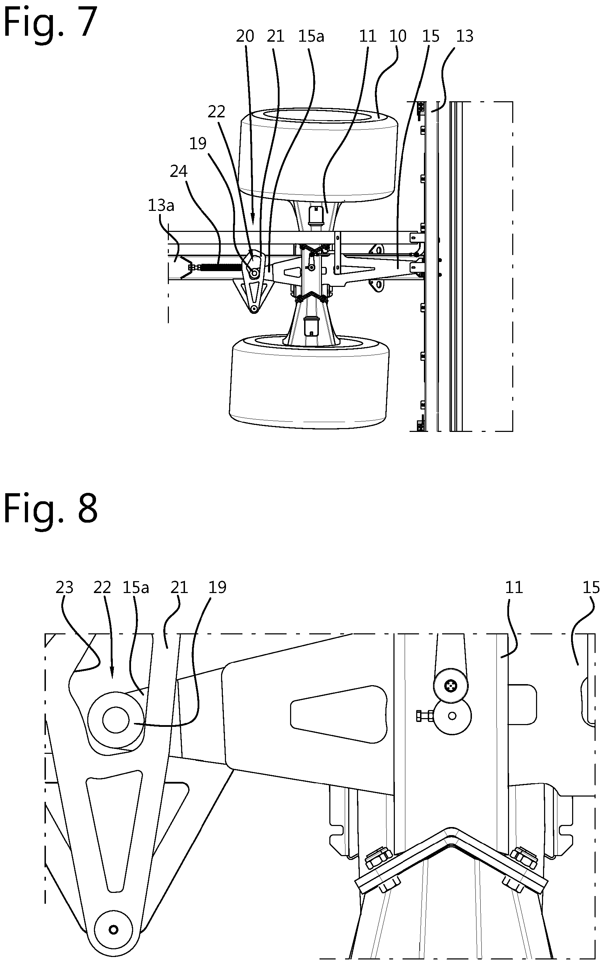

Figures 7 and 8 relate to the swung position of the swing axle 11 and show how, in this position, the holder arm 15 extends at an angle with respect to the longitudinal direction 6 of the vehicle 1, with the holder arm 15 being pulled towards the wheel 10 in the lowest position, as it were, and how the roller 19 is positioned on the guiding surface 23. Compared to the position of the roller 19 in the deepest portion of the V-shape, the roller 19 has been moved out of the deepest portion via one of the legs of the V-shape until it reached a delimitation of the opening 22. The illustrated swung position is thus a maximum swung position in the direction about the swing axis 16 which is shown in Figure 6.

The exact shape of the guiding surface 23 may be chosen in such a way, that a desired relationship between the difference in pressure of the wheels 10 on the ground and the angular displacement of the swing axle 11 about the swing axis 16 is achieved, in which case then the force/displacement curve of the pressure spring 24 has been taken into account.

It follows from the above that a free swinging movement of the swing axle 11 is not readily possible in the context of the invention. Instead, the swing axle 11 is held securely in circumstances of a relatively small pressure difference of the wheels 10 and only released in circumstances of a relatively large pressure difference, wherein the degree to which the swinging movement is then allowed may be limited.

It will be clear to those skilled in the art that the scope of the invention is not limited to the examples described above, but that various variations and modifications thereof are possible without departing from the scope of the invention as defined in the attached claims. Thus, a person skilled in the art will understand that alternatives are possible for construction details which are shown in the figures and which have been described above, and that this disclosure does not suggest an intrinsic link of construction details where it is clear to a person skilled in the art that alternative combinations of measures are possible. It is, for example, possible that, for the stabilizing element 21 with a guiding surface 23, as used, the guiding surface 23 is a portion of a peripheral edge of the stabilizing element 21. If the vehicle 1 comprises a holder arm 15, this does not necessarily have to be provided with an extended portion 15a and a roller 19 in order to be able to cooperate with the guiding surface 23. Also, many alternatives for the use of the pressure spring 24 are conceivable.

## Claims

1. Autonomous and self-propelled vehicle (1) for uneven terrain, comprising:
- a frame (13) on which a ball hinge (14) is situated,
- a pair of individually driven wheels (10) and a swing axle (11) to which the wheels (10) are attached, wherein the swing axle (11) is movable about a swing axis (16) through the ball hinge (14) in order to perform a swinging movement, which swing axis (16) extends in a direction at right angles to rotation axes (17) of the wheels (10), and wherein the swing axle (11) is also movable about a steering axis (18) through the ball hinge (14) in order to perform a steering movement, which steering axis (18) extends in a direction at right angles to both the swing axis (16) and the rotation axes (17) of the wheels (10), and
- a stabilizing mechanism (20) which is coupled to the frame (13) and is configured to keep the swing axle (11) in a defined rest swing position below a threshold value for a difference in pressure of the wheels (10) on the ground,
wherein the stabilizing mechanism (20) comprises prestressing means (24) which are configured to prestress the swing axle (11) to the defined rest swing position by exerting a prestressing force on the swing axle (11),
**characterized in that**
the stabilizing mechanism (20) comprises a stabilizing element (21) which is coupled to the frame (13) and is movable with respect to the frame (13) about an axis which runs parallel to the steering axis (18), wherein the stabilizing element (21) has a guiding surface (23), and wherein the prestressing means (24) are configured to tension the guiding surface (23) against a follower element (19) which is coupled to the swing axle (11).

2. Vehicle (1) according to Claim 1, wherein the stabilizing mechanism (20) is furthermore configured to allow a swinging movement of the swing axle (11) above the threshold value for a difference in pressure of the wheels (10) on the ground at a defined relationship for a difference in pressure of the wheels (10) on the ground and an angular displacement of the swing axle (11) about the swing axis (16) with respect to the rest swing position.

3. Vehicle (1) according to Claim 1 or 2, wherein the stabilizing mechanism (20) is furthermore configured to determine a maximum angular displacement of the swing axle (11) about the swing axis (16) with respect to the rest swing position, in two directions about the swing axis (16).

4. Vehicle (1) according to one of Claims 1-3, wherein the prestressing means (24) comprise at least a spring means.

5. Vehicle (1) according to one of Claims 1-4, wherein the follower element (19) is a roller which is rotatable about an axis which runs parallel to the steering axis (18).

6. Vehicle (1) according to one of Claims 1-5, wherein the stabilizing element (21) contains an opening (22), and wherein the guiding surface (23) is a portion of the surface of the stabilizing element (21) which surrounds the opening (22).

7. Vehicle (1) according to one of Claims 1-6, wherein the guiding surface (23) has a relatively narrow central portion which is configured to hold the follower element (19) in a shape-determined manner when the swing axle (11) is in the rest swing position, and has a configuration which generally diverges from the central portion.

8. Vehicle (1) according to one of Claims 1-7, wherein the guiding surface (23) has a generally V-shaped configuration.

9. Vehicle (1) according to one of Claims 1-8, wherein a shape of each of two portions of the guiding surface (23) which are configured to guide the follower element (19) during an angular displacement of the swing axle (11) about the swing axis (16) with respect to the rest swing position is adapted to, in combination with a force/displacement curve of the prestressing means (24), produce a substantially constant difference in the pressure of the wheels (10) on the ground.

10. Vehicle (1) according to one of Claims 1-9, comprising a holder arm (15) which is coupled to the frame (13) and is movable with respect to the frame (13) about an axis which runs parallel to the steering axis (18), wherein the swing axle (11) is coupled to the holder arm (15) and is movable with respect to the holder arm (15) about the steering axis (18).

11. Vehicle (1) according to Claim 10, wherein the stabilizing mechanism (20) engages with the holder arm (15).

12. Vehicle (1) according to Claim 10 where dependent on one of Claims 1-9, wherein the stabilizing mechanism (20) engages with the holder arm (15), and wherein the follower element (19) is situated on the holder arm (15).

13. Vehicle (1) according to one of Claims 1-12, which vehicle (1) comprises a cutting mechanism (2) and/or a mechanism (3) which is configured to collect cut plants.

## Patentansprüche

1. Autonomes und selbstfahrendes Fahrzeug (1) für unebenes Gelände, Folgendes umfassend:
- ein Gestell (13), an dem sich ein Kugelgelenk (14) befindet,
- ein Paar einzeln angetriebener Räder (10) und eine Pendelachse (11), an der die Räder (10) angebracht sind, wobei die Pendelachse (11) durch das Kugelgelenk (14) um eine Pendelachse (16) beweglich ist, um eine Pendelbewegung auszuführen, wobei sich die Pendelachse (16) in einer Richtung in rechten Winkeln zu Drehachsen (17) der Räder (10) erstreckt und wobei die Pendelachse (11) durch das Kugelgelenk (14) außerdem um eine Lenkachse (18) beweglich ist, um eine Lenkbewegung auszuführen, wobei sich die Lenkachse (18) in eine Richtung in rechten Winkeln zu sowohl der Pendelachse (16) als auch den Drehachsen (17) der Räder (10) erstreckt, und
- einen Stabilisierungsmechanismus (20), der mit dem Gestell (13) gekoppelt und dafür gestaltet ist, die Pendelachse (11) in einer definierten Ruhependelposition unter einem Grenzwert für eine Differenz des Drucks der Räder (10) auf den Boden zu halten,
wobei der Stabilisierungsmechanismus (20) Vorspannmittel (24) umfasst, die dafür gestaltet sind, die Pendelachse (11) durch Ausüben einer Vorspannkraft auf die Pendelachse (11) in die definierte Ruhependelposition vorzuspannen,
**dadurch gekennzeichnet, dass**
der Stabilisierungsmechanismus (20) ein Stabilisierungselement (21) umfasst, das mit dem Gestell (13) gekoppelt ist und im Verhältnis zu dem Gestell (13) um eine Achse beweglich ist, die parallel zur Lenkachse (18) verläuft, wobei das Stabilisierungselement (21) eine Führungsfläche (23) aufweist und wobei die Vorspannmittel (24) dafür gestaltet sind, die Führungsfläche (23) gegen ein Nachlaufelement (19) zu spannen, das mit der Pendelachse (11) gekoppelt ist.

2. Fahrzeug (1) nach Anspruch 1, wobei der Stabilisierungsmechanismus (20) des Weiteren dafür gestaltet ist, eine Pendelbewegung der Pendelachse (11) über dem Grenzwert für eine Differenz des Drucks der Räder (10) auf den Boden bei einem definierten Verhältnis für eine Differenz des Drucks der Räder (10) auf den Boden und einer Winkelverlagerung der Pendelachse (11) um die Pendelachse (16) im Verhältnis zur Ruhependelposition zu ermöglichen.

3. Fahrzeug (1) nach Anspruch 1 oder 2, wobei der Stabilisierungsmechanismus (20) des Weiteren dafür gestaltet ist, eine maximale Winkelverlagerung der Pendelachse (11) um die Pendelachse (16) im Verhältnis zur Ruhependelposition in zwei Richtungen um die Pendelachse (16) zu bestimmen.

4. Fahrzeug (1) nach einem der Ansprüche 1 bis 3, wobei die Vorspannmittel (24) mindestens ein Federmittel umfassen.

5. Fahrzeug (1) nach einem der Ansprüche 1 bis 4, wobei das Nachlaufelement (19) eine Rolle ist, die um eine Achse drehbar ist, die parallel zur Lenkachse (18) verläuft.

6. Fahrzeug (1) nach einem der Ansprüche 1 bis 5, wobei das Stabilisierungselement (21) eine Öffnung (22) enthält, und wobei die Führungsfläche (23) ein Abschnitt der Fläche des Stabilisierungselements (21) ist, welche die Öffnung (22) umgibt.

7. Fahrzeug (1) nach einem der Ansprüche 1 bis 6, wobei die Führungsfläche (23) einen relativ schmalen mittleren Abschnitt aufweist, der dafür gestaltet ist, das Nachlaufelement (19) in einer formbestimmten Weise zu halten, wenn sich die Pendelachse (11) in der Ruhependelposition befindet, und eine Gestaltung aufweist, die im Allgemeinen von dem mittleren Abschnitt aus auseinanderläuft.

8. Fahrzeug (1) nach einem der Ansprüche 1 bis 7, wobei die Führungsfläche (23) eine im Allgemeinen V-förmige Gestaltung aufweist.

9. Fahrzeug (1) nach einem der Ansprüche 1 bis 8, wobei eine Form von jedem von zwei Abschnitten der Führungsfläche (23), die dafür gestaltet sind, das Nachlaufelement (19) während einer Winkelverlagerung der Pendelachse (11) um die Pendelachse (16) im Verhältnis zur Ruhependelposition zu führen, dafür eingerichtet ist, in Kombination mit einer Kraft-Verlagerung-Kurve der Vorspannmittel (24) eine im Wesentlichen konstante Differenz des Drucks der Räder (10) auf den Boden zu erzeugen.

10. Fahrzeug (1) nach einem der Ansprüche 1 bis 9, einen Haltearm (15) umfassend, der mit dem Gestell (13) gekoppelt ist und im Verhältnis zum Gestell (13) um eine Achse beweglich ist, die parallel zur Lenkachse (18) verläuft, wobei die Pendelachse (11) an den Haltearm (15) gekoppelt und im Verhältnis zum Haltearm (15) um die Lenkachse (18) beweglich ist.

11. Fahrzeug (1) nach Anspruch 10, wobei der Stabilisierungsmechanismus (20) mit dem Haltearm (15) in Eingriff steht.

12. Fahrzeug (1) nach Anspruch 10, wenn abhängig von einem der Ansprüche 1 bis 9, wobei der Stabilisierungsmechanismus (20) mit dem Haltearm (15) in Eingriff steht und wobei sich das Nachlaufelement (19) an dem Haltearm (15) befindet.

13. Fahrzeug (1) nach einem der Ansprüche 1 bis 12, wobei das Fahrzeug (1) einen Schneidemechanismus (2) und/oder einen Mechanismus (3), der dafür gestaltet ist, abgeschnittene Pflanzen aufzusammeln, umfasst.

## Revendications

1. Véhicule autonome et autopropulsé (1) pour terrain irrégulier, comportant :
- un châssis (13) sur lequel est située une articulation (14) à rotule,
- une paire de roues (10) entraînées individuellement et un essieu oscillant (11) auquel sont rattachées les roues (10), l'essieu oscillant (11) étant mobile autour d'un axe (16) d'oscillation par l'intermédiaire de l'articulation (14) à rotule afin d'effectuer un mouvement d'oscillation, lequel axe (16) d'oscillation s'étendant dans une direction à angle droit par rapport à des axes (17) de rotation des roues (10), et l'essieu oscillant (11) étant également mobile autour d'un axe (18) de direction par l'intermédiaire de l'articulation (14) à rotule afin d'effectuer un mouvement de direction, lequel axe (18) de direction s'étendant dans une direction à angle droit à la fois par rapport à l'axe (16) d'oscillation et aux axes (17) de rotation des roues (10), et
- un mécanisme (20) de stabilisation qui est couplé au châssis (13) et est configuré pour maintenir l'essieu oscillant (11) dans une position définie de repos d'oscillation en-dessous d'une valeur seuil d'une différence de pression des roues (10) sur le sol,
le mécanisme (20) de stabilisation comportant des moyens (24) de précontrainte qui sont configurés pour précontraindre l'essieu oscillant (11) vers la position définie de repos d'oscillation en exerçant un effort de précontrainte sur l'essieu oscillant (11),
**caractérisé en ce que**
le mécanisme (20) de stabilisation comporte un élément (21) de stabilisation qui est couplé au châssis (13) et est mobile par rapport au châssis (13) autour d'un axe qui s'étend parallèlement à l'axe (18) de direction, l'élément (21) de stabilisation présentant une surface (23) de guidage, et les moyens (24) de précontrainte étant configurés pour mettre en tension la surface (23) de guidage contre un élément suiveur (19) qui est couplé à l'essieu oscillant (11).

2. Véhicule (1) selon la revendication 1, le mécanisme (20) de stabilisation étant en outre configuré pour permettre un mouvement d'oscillation de l'essieu oscillant (11) au-dessus de la valeur seuil d'une différence de pression des roues (10) sur le sol à une relation définie d'une différence de pression des roues (10) sur le sol et d'un déplacement angulaire de l'essieu oscillant (11) autour de l'axe (16) d'oscillation par rapport à la position de repos d'oscillation.

3. Véhicule (1) selon la revendication 1 ou 2, le mécanisme (20) de stabilisation étant en outre configuré pour déterminer un déplacement angulaire maximum de l'essieu oscillant (11) autour de l'axe (16) d'oscillation par rapport à la position de repos d'oscillation, dans deux sens autour de l'axe (16) d'oscillation.

4. Véhicule (1) selon l'une des revendications 1 à 3, les moyens (24) de précontrainte comportant au moins un moyen de ressort.

5. Véhicule (1) selon l'une des revendications 1 à 4, l'élément suiveur (19) étant un galet qui peut tourner autour d'un axe s'étendant parallèlement à l'axe (18) de direction.

6. Véhicule (1) selon l'une des revendications 1 à 5, l'élément (21) de stabilisation contenant une ouverture (22), et la surface (23) de guidage étant une partie de la surface de l'élément (21) de stabilisation qui entoure l'ouverture (22).

7. Véhicule (1) selon l'une des revendications 1 à 6, la surface (23) de guidage présentant une partie centrale relativement étroite qui est configurée pour maintenir l'élément suiveur (19) d'une manière déterminée par la forme lorsque l'essieu oscillant (11) est dans la position de repos d'oscillation, et présentant une configuration qui diverge généralement à partir de la partie centrale.

8. Véhicule (1) selon l'une des revendications 1 à 7, la surface (23) de guidage présentant une configuration ayant la forme générale d'un V.

9. Véhicule (1) selon l'une des revendications 1 à 8, une forme de chacune de deux parties de la surface (23) de guidage qui sont configurés pour guider l'élément suiveur (19) pendant un déplacement angulaire de l'essieu oscillant (11) autour de l'axe (16) d'oscillation par rapport à la position de repos d'oscillation étant conçue pour, en combinaison avec une courbe effort/déplacement des moyens (24) de précontrainte, produire une différence sensiblement constante dans la pression des roues (10) sur le sol.

10. Véhicule (1) selon l'une des revendications 1 à 9, comportant un bras-support (15) qui est couplé au châssis (13) et est mobile par rapport au châssis (13) autour d'un axe qui s'étend parallèlement à l'axe (18) de direction, l'essieu oscillant (11) étant couplé au bras-support (15) et étant mobile par rapport au bras-support (15) autour de l'axe (18) de direction.

11. Véhicule (1) selon la revendication 10, le mécanisme (20) de stabilisation interagissant avec le bras-support (15) .

12. Véhicule (1) selon la revendication 10 lorsqu'elle est dépendante d'une des revendications 1 à 9, le mécanisme (20) de stabilisation interagissant avec le bras-support (15), et l'élément suiveur (19) étant situé sur le bras-support (15).

13. Véhicule (1) selon l'une des revendications 1 à 12, lequel véhicule (1) comportant un mécanisme (2) de coupe et/ou un mécanisme (3) qui est configuré pour ramasser des plantes coupées.
